# EUROPÄISCHE PATENTSCHRIFT

(11) **EP 3 048 707 B1**
(45) Veröffentlichungstag und Bekanntmachung des Hinweises auf die Patenterteilung: **28.11.2018**
(21) Anmeldenummer: 15196566.2
(22) Anmeldetag: 24.08.2012
(51) Int. Cl.: H02K 5/22, H02K 5/10, H02K 3/52, H02K 7/14, H02K 11/00, H02K 5/00, H02K 11/33, F04D 13/06, F04D 29/64

(54) **ELEKTROMOTOR, INSBESONDERE KÜHLERLÜFTERMOTOR**
ELECTRIC MOTOR, IN PARTICULAR COOLING FAN MOTOR
MOTEUR ELECTRIQUE EN PARTICULIER MOTEUR DE VENTILATEUR

(30) Priorität: 12.09.2011 DE 102011112817
(43) Veröffentlichungstag der Anmeldung: 27.07.2016
(62) Teilanmeldung aus: 12761893.2
(73) Patentinhaber: Brose Fahrzeugteile GmbH & Co. Kommanditgesellschaft, Würzburg, 97076 Würzburg (DE)
(72) Erfinder: OTT, Tobias, 72336 Balingen (DE); SCHENCKE, Thomas, 98704 Langewiesen (DE); SCHMIDT, Artur, 97082 Würzburg (DE); SCHULZ, Hermann, 97355 Kleinlangheim (DE); GWOZDZ, Jan, 97076 Würzburg (DE); ZIEGLER, Thomas, 97450 Schwebenried (DE); HUSSY, Thomas, 97957 Wittighausen (DE); MAUCH, Frank, 72362 Nusplingen (DE)
(74) Vertreter: FDST Patentanwälte

(56) Entgegenhaltungen:
- EP-A1- 1 217 715
- DE-A1-102007 010 865
- DE-A1-102008 000 124
- JP-A- 2010 161 863

## Beschreibung

Die Erfindung betrifft einen Elektromotor, insbesondere einen bürstenlosen Elektromotor mit Innenrotor, vorzugsweise einen Kühlerlüftermotor eines Kraftfahrzeugs, gemäß dem Oberbegriff des Anspruchs 1. Ein derartiger Elektromotor ist beispielsweise aus der DE 10 2009 013 363 A1 oder aus der JP 2010 161863 A bekannt.

Ein derartiger Elektromotor umfasst üblicherweise einen gegenüber einem feststehenden Stator oder Ständer drehbar gelagerten Rotor bzw. Läufer. Bei einem bürstenlosen Elektromotor ist der Stator häufig mit einer Drehfeldwicklung bestückt, mit der durch deren Beaufschlagung mit einem Wechselstrom ein magnetisches Drehfeld erzeugt wird. Der innerhalb des im Wesentlichen hohlzylindrischen Stators angeordnete Rotor ist in der Regel mit Permanentmagneten bestückt, die ein mit dem Drehfeld des Stators wechselwirkendes Rotormagnetfeld erzeugen.

Bei einem bürstenlosen Elektromotor wird der zur Speisung der Statorwicklung vorgesehene Wechselstrom üblicherweise durch einen Umrichter (Wechselrichter) erzeugt. Bei kleineren Elektromotoren ist dieser Umrichter zusammen mit einer zugeordneten Steuerelektronik häufig in ein Elektronikfach aufgenommen, das in das Motorgehäuse integriert ist. Die Steuerelektronik ist dabei vor Feuchtigkeit zu schützen, weshalb bei solchen, beispielsweise als Kühlerlüftermotoren in Kraftfahrzeugen eingesetzt Elektromotoren vergleichsweise hohen Anforderungen an die Dichtigkeit des Elektronikfaches gestellt werden.

Aus der JP 2010 161863 A ist ein Elektromotor mit einem ein Elektronikfach aufweisenden Gehäuse und mit einem Elektronikfachdeckel bekannt, welcher eine umlaufende Dichtnut aufweist und unter Zwischenlage eines Dichtrings mit dem Gehäuse verrastet ist. Hierzu dienen deckelseitige Rastösen, welche den Gehäuserand des Elektronikfachs übergreifen und mit dort gehäuseaußenseitig angeformten Rastnasen verrastet werden. Eine derartige Verrastung eines Gehäuseoberteils an einem Gehäuseunterteil einer Motorelektronik ist auch aus der EP 1 217 715 A1 und aus der DE 10 2007 010 865 A1 bekannt.

Der Erfindung liegt daher die Aufgabe zugrunde, einen Elektromotor der genannten Art anzugeben, dessen Elektronik mit möglichst geringem Aufwand zuverlässig abgedichtet ist.

Diese Aufgabe wird erfindungsgemäß gelöst durch die Merkmale des Anspruchs 1. Vorteilhafte Varianten, Ausgestaltungen und Weiterbildungen sind Gegenstand der Unteransprüche.

Danach umfasst der vorzugsweise bürstenlose und als Innenläufer konzipierte Elektromotor einen gegenüber einem Stator drehbar gelagerten Rotor und einen Motorträger. Der Motorträger bildet oder enthält ein Elektronikfach zur Aufnahme einer Umrichterelektronik. Diese umfasst zusätzlich zu passiven und aktiven Bauelementen, wie insbesondere mehrere Leistungshalbleiter, die in Brückenschaltung verschaltet sind, eine Leiterplatte, die unter anderem mit den Bauelementen bestückt ist.

Ein nachfolgend auch als Gehäusedeckel bezeichneter Elektronikfachdeckel deckt das Elektronikfach dichtend ab. Hierzu weisen der Elektronikfachdeckel eine umlaufende Dichtnut und der Motorträger im Bereich des Elektronikfaches einen um dieses verlaufenden Dichtrand auf. Dieser ist mit einem Dichtsteg versehen, der in die Dichtnut des Elektronikfachdeckels, insbesondere formschlüssig, eingreift.

Der Dichtsteg ragt nockenartig aus dem umlaufenden Dichtrand empor und ist an diesen unter Ausbildung beidseitiger Dichtschultern angeformt. Die Abmessung des trägerseitigen Dichtrandes einerseits sowie der deckelseitigen Dichtnut andererseits sind derart gewählt, dass zwischen dem Dichtsteg und der Dichtnut ein Füllspalt zur Aufnahme eines Dichtmaterials verbleibt. Das Dichtmaterial ist eine durch Erwärmung verklebende Dichtmasse.

Um beim Aufsetzen des Elektronikfach- bzw. Gehäusedeckels diesen möglichst exakt zu zentrieren und damit einen möglichst gleichmäßigen Füllspalt für die Dichtmasse zu gewährleisten, zumindest zur Grobzentrierung des Elektronik- bzw. Gehäusedeckels am Motorträger sind an den Gehäusedeckel vorzugsweise auf gegenüber liegenden Seiten Fixierklammern angeformt. Diese übergreifen am Motorträger vorgesehene radial verlaufende Rippen, um mit diesen vorzugsweise zu verrasten.

Zudem können in die deckelseitig umlaufende Dichtnut Abstand haltende Nocken oder Noppen eingeformt sein. Für eine entsprechende, ausreichende Zentrierung und gleichmäßige Spaltbildung genügen wenige, an exponierten Stellen vorgesehene Abstandsnocken bzw -noppen. Diese sind vorzugsweise an der Innenseite der Dichtnut, d.h. an derjenigen Nutwand angeformt, die dem Elektronikfach zugewandt ist. Hierdurch verbleibt derjenige Füllspaltbereich unterbrechungsfrei, der zwischen der gegenüber liegenden außenseitigen Nutwand der deckelseitigen Dichtnut und dem Dichtsteg gebildet ist. Somit ist gewährleistet, dass zumindest dieser Füllspaltbereich in der Fügeverbindung zwischen dem Gehäusedeckel und dem Elektronikfach mit einem unterbrechungsfreien und ausreichend voluminösen Strang des Dichtmaterials ausgefüllt wird. Hierdurch ist in einfacher Weise eine zuverlässige Abdichtung zwischen dem Gehäusedeckel und dem Elektronikfach hergestellt.

In einer geeigneten Ausführungsform ist der Stator mit einem Kunststoffmantel umspritzt. Eine besonders zuverlässig und einfach herzustellende Verbindung zwischen dem Motorträger und dem Stator wird zweckmäßigerweise dadurch erreicht, dass an den Kunststoffmantel des Stators eine Anzahl von Stemmnoppen angeformt sind, die am Motorträger vorgesehene Fixieröffnungen durchgreifen. Zum Fügen des Motorträgers und des Stators bzw. dessen Kunststoffmantels, werden die die Fixieröffnungen durchgreifenden Stemmnoppen beispielsweise heiß verstemmt und somit verformt. Geigneterweise sind vier derartige Stemmstellen zwischen dem im Wesentlichen kreisförmigen Stator bzw. dessen Kunststoffmantel und dem geeigneter Weise relativ flachen und als Gussteil hergestellten Motorträger vorgesehen.

Das erfindungsgemäße Dichtkonzept des Elektromotors umfasst zusätzlich Dichtelemente, die eine abgedichtete Durchführung der Wicklungs- oder Anschlussenden der aus Spulen gebildeten statorseitigen Drehfeldwicklung in das Elektronikfach ermöglichen. Hierzu sind vorzugsweise aus einem Zweikomponentenkunststoff hergestellte Dichtelemente vorgesehen, die eine vergleichsweise harte Stützkomponente und eine vergleichsweise weiche Dichtungskomponente als einstückiges Bauteil umfassen.

Im Montagezustand sitzen die Dichtelemente mit deren vergleichsweise weichen Dichtungskomponente in Durchtrittsöffnungen ein, die im Bereich des Bodens des Elektronikfaches in den Motorträger eingebracht sind. Diese weichen Dichtungskomponenten der Dichtelemente sind geeigneter Weise nach Art einer Labyrinthdichtung ausgebildet.

Die vergleichsweise harten Stützkomponenten der Dichtelemente ragen auf der dem Gehäusedecke abgewandten und dem Stator zugewandten Trägerseite des Motorträgers heraus. Dabei ist die Position der Dichtelemente derart gewählt, dass deren vergleichsweise harten Stützkomponenten sich axial oberhalb des statorseitigen Kunstoffmantels befinden. Zur fluchtenden Positionierung der Dichtelemente mit dem statorseitigen Kunststoffmantel sind in diesen Aufnahmetaschen eingebracht, in denen die vergleichsweise harten Stützkomponenten einsitzen.

Nachfolgend wird ein Ausführungsbeispiel der Erfindung anhand einer Zeichnung näher erläutert. Darin zeigen:
- Fig. 1: in einer Explosionsdarstellung einen Kühlerlüfter für ein Kraftfahrzeug mit einem eigen gekühlten, bürstenlosen Innenrotormotor mit integrierter Umrichterelektronik,
- Fig. 2: in perspektivischer Darstellung mit Blick auf eine Anschlussseite den Motor gemäß Fig. 1,
- Fig. 3: in Draufsicht den Motor gemäß Fig. 1 bei abgenommenem Elektronikfachdeckel (Gehäusedeckel),
- Fig. 4: in perspektivischer Darstellung den Elektronikfachdeckel mit Blick auf dessen Innenseite,
- Fig. 5: in perspektivischer Darstellung einen Motorträger des Elektromotors mit Blick in ein Elektronikfach ohne Umrichterelektronik,
- Fig. 6: einen Ausschnitt VI aus Fig. 4 in größerem Maßstab mit einer an den Gehäusedeckel angeformten Fixierklammer und einer Abstandnocke in einer Deckeldichtnut,
- Fig. 7: ausschnittsweise in einer Schnittdarstellung die zentrierende Fügeverbindung des Gehäusedeckels mit dem Rand des Elektronikfaches des Motorträger,
- Fig. 8: eine Darstellung gemäß Fig. 2 mit Blick auf die Rastverbindung zwischen der deckelseitigen Fixierklammer und einer trägerseitigen Rippe,
- Fig. 9: in perspektivischer Darstellung den mit Spulen einer Drehfeldwicklung bewickelten Stator des Motors mit umspritztem Kunststoffmantel mit Stemmnoppen sowie mit über Dichtelementen geführten Wicklungsenden, gemäß Fig. 8 die Wirkung des Rotors zur Eigenkühlung des Motors bei Rotordrehung entgegen der Referenzdrehrichtung,
- Fig. 10: in einer Darstellung gemäß Fig. 5 den mit dem umspritzten Stator gefügten Motorträger mit Blick auf eine Stemmstelle,
- Fig. 11: in perspektivischer Darstellung die Drehfeldwicklung mit deren durch die Dichtelemente geführten Wicklungsenden,
- Fig. 12: die Wicklungs- und Dichtelement-Anordnung gemäß Fig. 11 bei aufgesetztem Motorträger, und
- Fig. 13: die Anordnung gemäß Fig. 11 inklusive Statorblechpaket.

Einander entsprechende Teile und Größen sind in allen Figuren stets mit gleichen Bezugszeichen versehen.

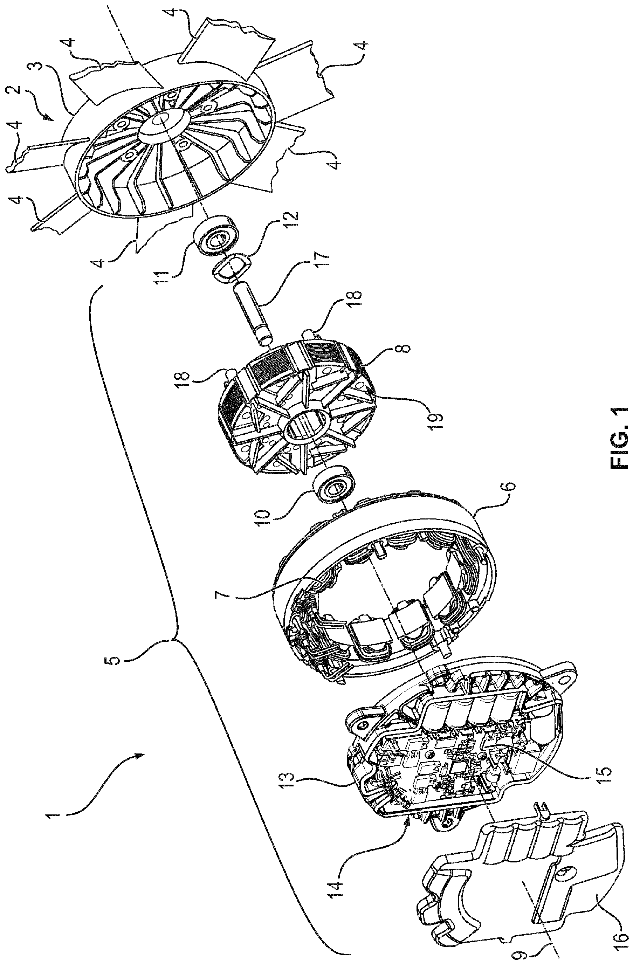

Fig. 1 zeigt in auseinander genommenem Zustand einen Lüfter 1 für den Kühler eines Kraftfahrzeugs. Der Lüfter 1 umfasst ein Lüfterrad 2 mit einer zentralen Kappe 3, um deren Außenumfang (nur ansatzweise dargestellte) Luftleitschaufeln 4 gleichverteilt angeordneten sind. Der Lüfter 1 umfasst des Weiteren einen auch als Lüftermotor bezeichneten Elektromotor 5, mittels welchem das Lüfterrad 2 drehangetrieben ist.

Der Motor 5 wird im Wesentlichen gebildet durch einen Stator 6, der mit einer dreiphasigen Drehfeldwicklung 7 in Form von Spulen bewickelt ist. Der Motor 5 umfasst des Weiteren einen permanent erregten Rotor 8, der im Inneren des Stators 6 um eine Motorachse 9 drehbar gelagert ist. Zur Lagerung des Rotors 8 umfasst der Motor 5 zwei Wälzlager 10 und 11, die von axial entgegengesetzten Seiten am Rotor 8 angreifen. Das Axialspiel des Rotors 8 zwischen den beiden Wälzlagern 10 und 11 ist hierbei durch einen Federring 12 angefedert.

Der Motor 5 umfasst des Weiteren einen etwa scheibenförmigen Motorträger 13. An einer von dem Lüfterrad 2 abgewandten Stirnseite ist in den Motorträger 13 ein Elektronikfach 14 eingebracht, in das eine Umrichterelektronik 15 eingesetzt ist. Zur dichten Verschließung des Elektronikfachs 14 umfasst der Motor 5 einen nachfolgend auch als Gehäusedeckel bezeichneten Elektronikfachdeckel 16.

Der Rotor 8 ist (in nicht näher dargestellter Weise) durch ein Blechpaket gebildet, in das Permanentmagneten zur Erzeugung eines Erregerfeldes eingesetzt sind, wobei das Blechpaket zusammen mit den eingesetzten Permanentmagneten mit einem Kunststoffmantel umspritzt ist. In ähnlicher Weise besteht auch der Stator 6 aus einem Blechpaket, das mit einem Kunststoffmantel umspritzt ist.

Der Motorträger 13 ist durch ein einstückiges Druckgussteil aus Aluminium gebildet. Bei dem Elektronikfachdeckel 16 handelt es sich vorzugsweise um ein Spritzgussteil aus Kunststoff.

An seiner Vorderseite ist der Rotor 8 mit vier Schraubdomen 18 versehen, mittels welchen der Rotor 8 im Montagezustand an dem Lüfterrad 2 verschraubt ist. Die Befestigung des Motors 5 und damit des gesamten Lüfters 1 an dem Fahrzeug erfolgt über den Motorträger 13, der hierfür mit drei von seinem Außenumfang abstehenden Schraublaschen 19 versehen ist. Bei dem Motor 5 handelt es sich um einen bürstenlosen eigen gekühlten Innenrotor- bzw. Innenläufermotor.

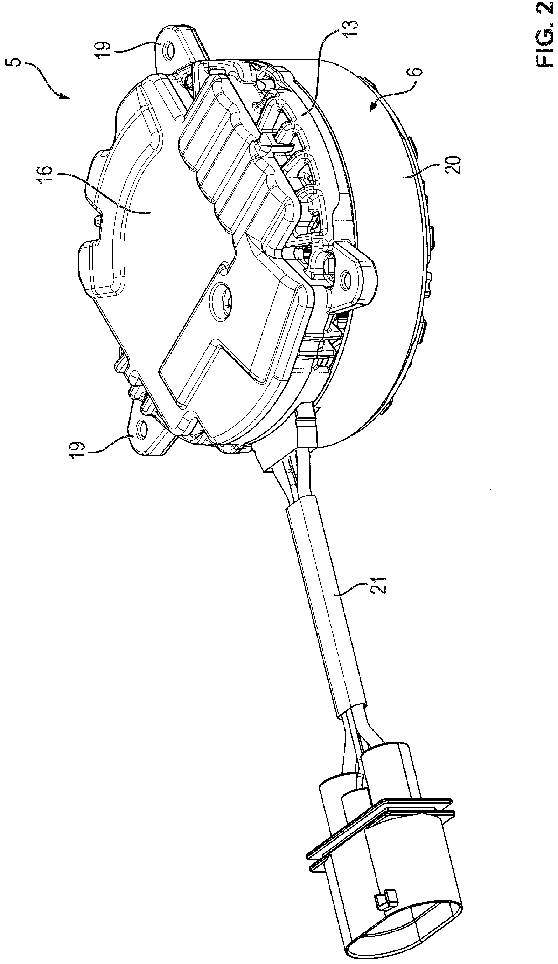

Im in Fig. 2 gezeigten, zusammengebauten Zustand des Motors 5 ist der Stator 6 fest auf einer Vorderseite des Motorträgers 13 aufgebracht. Der Rotor 8 ist in den mit dem Kunststoffmantel 20 umspritzten Stator 6 eingesetzt, wobei der Rotor 8 von beiden Axialseiten her von je einem der beiden Wälzlager 10 und 11 flankiert ist. Die Wälzlager 10 und 11 sind hierbei in nicht näher dargestellter Art und Weise an einem Achsbolzen 17 gelagert, der seinerseits an dem Motorträger 13 befestigt ist.

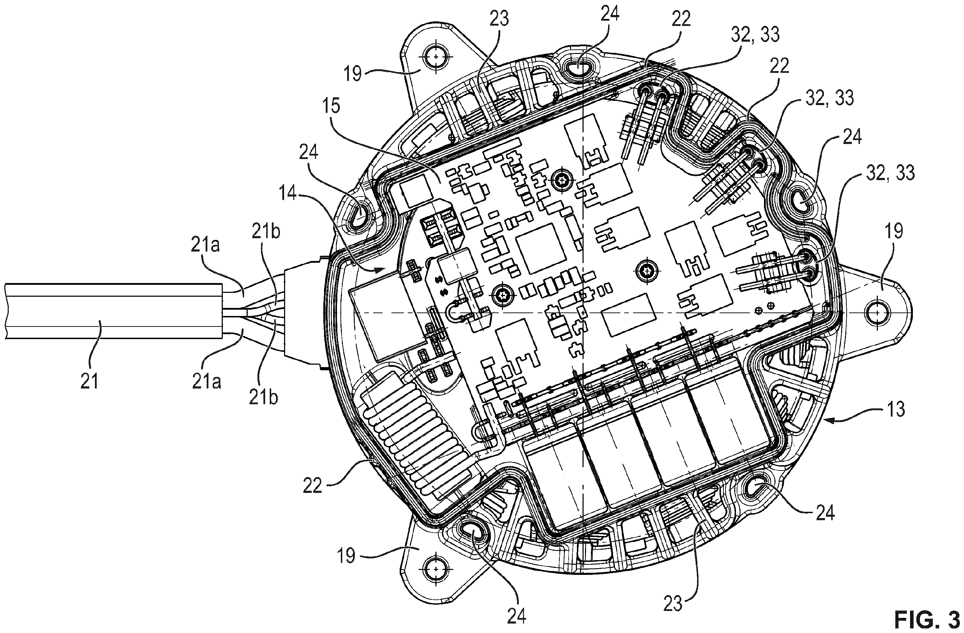

Fig. 3 zeigt den Motor 5 bei abgenommenem Elektronikfachdeckel 16 mit Blick in das Elektronikfach 14 mit darin angeordneter Umrichterelektronik 15. An diese geführt und mit dieser kontaktiert sind Versorgungsleitungen (Plus- und Minus- oder Masse-Pol) 21a sowie Sensor- oder Datenleitungen 21b eines Anschlusskabels 21. Das Elektronikfach 14 ist von einem umlaufenden, geschlossenen Dicht- oder Fügerand 22 umschlossen. Außerhalb des Elektronikfaches 14 weist der Motorträger 13 im Wesentlichen radial verlaufende Klemmrippen 23 auf. Diese befinden sich im Wesentlichen an gegenüberliegenden Seiten des Elektronikfaches 14. An mehreren, am Umfang des Motorträgers 13 verteilten Positionen befinden sich Fixier- oder Stemmöffnungen 24.

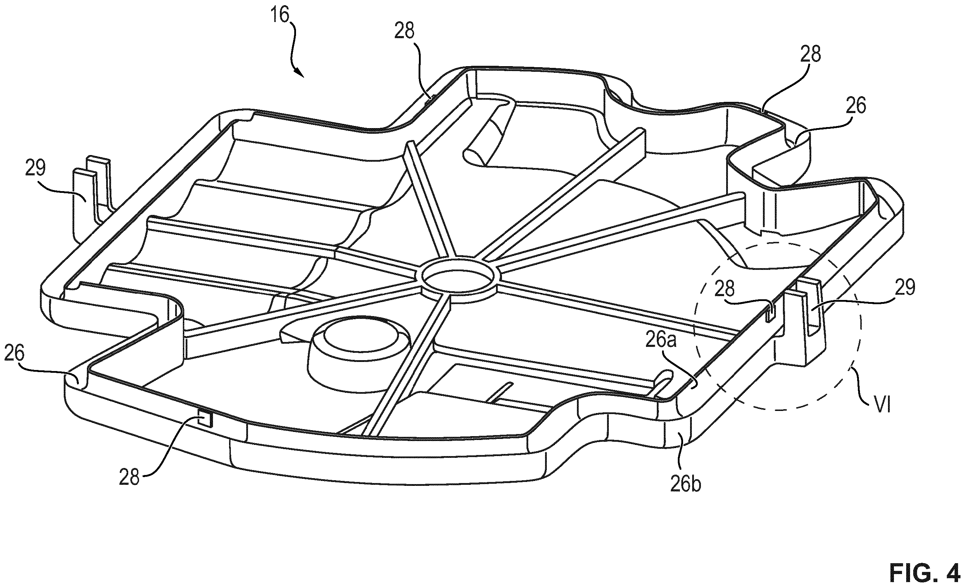

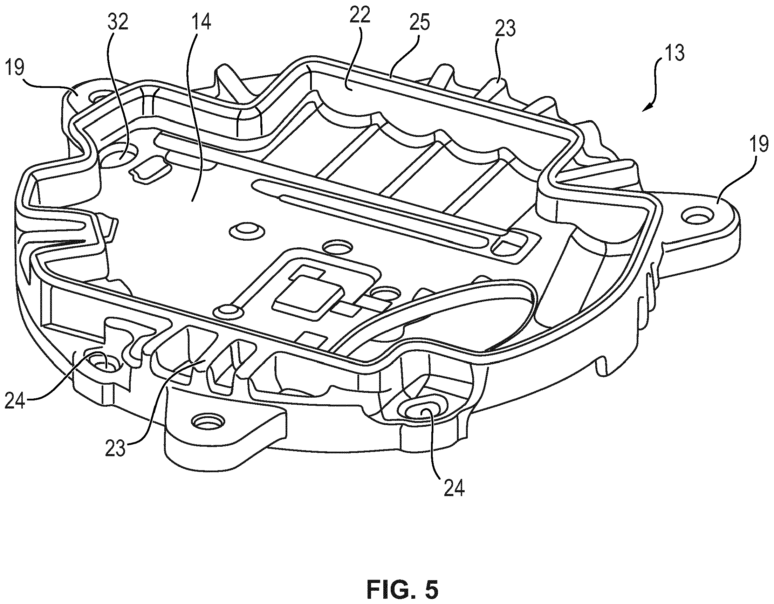

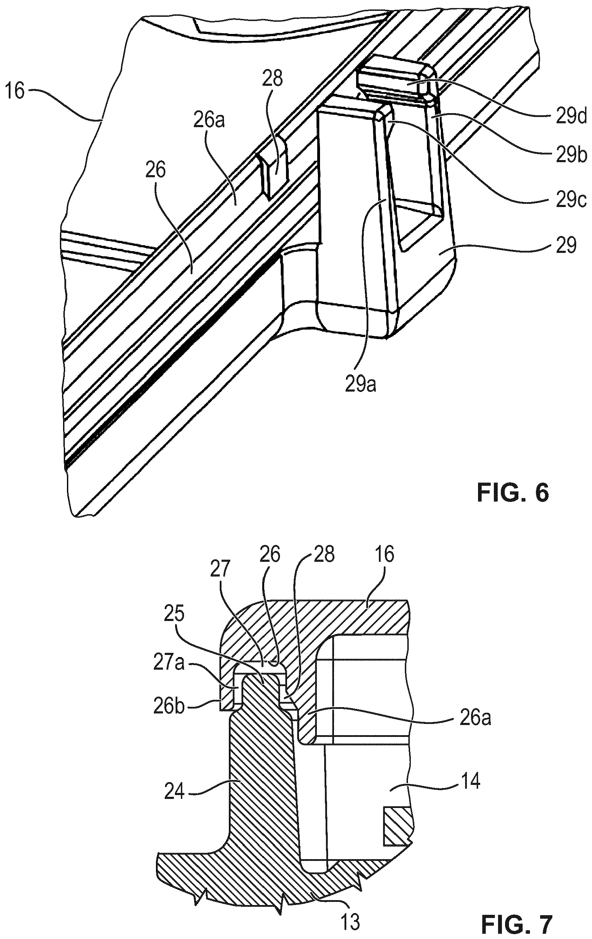

Während Fig. 4 den Elektronikfach- bzw. Gehäusedeckel 16 mit Blick auf dessen Innenseite zeigt, ist in Fig. 5 in perspektivischer Darstellung der Motorträger 13 mit dessen vom Dichtrand 22 umschlossenen Elektronikfach 14 ohne Umrichterelektronik 15 gezeigt. An den Dichtrand 22 des Elektronikfaches 14 ist ebenfalls umlaufend geschlossen ein erhabener Dichtsteg 25 angeformt, dessen Kontur ebenso wie diejenige des Elektronikfachrandes 24 und dessen schulterartiger Übergangskontur zum Dichtsteg 25 in Fig. 7 vergleichsweise deutlich erkennbar ist.

In der Fügeverbindung des Elektronikfachdeckels 16 mit dem Motorträger 13 greift der trägerseitige Dichtsteg 25 in eine korrespondierende Dichtnut 26 des Gehäusedeckels 16 ein (Fig. 7). Die Abmessungen des trägerseitigen Dichtsteges 25 sowie der deckelseitigen Dichtnut 26 sind derart aufeinander abgestimmt, dass zwischen diesen ein Füllspalt 27 für ein (nicht gezeigtes) Dichtmaterial verbleibt.

An die Innenseite der Dichtnut 26, nämlich an deren dem Elektronikfach 14 zugewandten Nutwand 26a sind eine Anzahl von Abstandsnocken 28 angeformt, die in die Dichtnut 26 hineinragen. In der Fügeverbindung liegt der trägerseitige Dichtsteg 25 an den entsprechend exponierten Stellen an den Abstandsnocken 28 an. Diese Abstandsnocken 28 bewirken beim Aufsetzen des Gehäusedeckels 16 auf den Rand 24 des Elektronikfachs 14 eine zuverlässige Zentrierung derart, dass entlang des umlaufend geschlossenen Dichtrandes 24 des Elektronikfachs 14 zwischen dem trägerseitigen Dichtsteg 25 und der deckelseitigen Dichtnut 26 in der Fügeverbindung ein entsprechend gleichmäßiger Füllspalt 27 für die beispielsweise durch Erwärmung verklebende Dichtmasse verbleibt. Insbesondere ist auf der den Abstandsnocken 28 gegenüberliegenden Nutseite, d.h. zwischen der außenseitigen Nutwand 26b und dem Dichtsteg 25 ein ununterbrochener - also auch nockenfreier - Füllspaltbereich 27a hergestellt. Die darin eingefüllte Dicht- oder Klebermasse stellt somit ein umlaufend praktisch gleichbleibendes Dicht- bzw. Klebervolumen für eine besonders zuverlässige Abdichtung des Elektronikfaches 14 und feste Klebeverbindung zwischen dem Gehäusedeckel 16 und dem Motorträger 13 bereit.

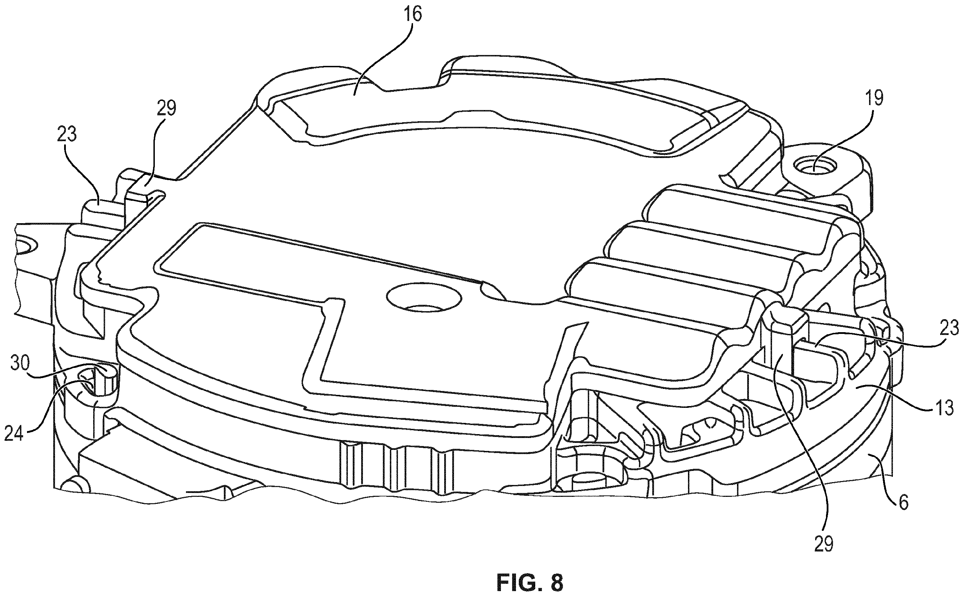

Zur Grobfixierung und/oder Grobpositionierung ist an dem Elektronikfachdeckel 16 mindestens eine Fixier- oder Rastklammer 29 angeformt. Wie aus Fig. 4 ersichtlich, sind zwei möglichst diametral gegenüberliegende Fixierklammern 29 vorgesehen. Wie aus Fig. 2 und vergleichsweise deutlich aus Fig. 8 ersichtlich ist, verrasten die Fixierklammern 29 mit korrespondierenden Klemmrippen 23 des Motorträgers 13.

Hierzu ist gemäß Fig. 6 die jeweilige Fixierklammer 29 im Wesentlichen U-förmig mit zwei Klemmschenkeln 29a und 29b gebildet, die jeweils endseitig eine Rastnocke 29c bzw. 29d tragen. Die Rastnocken 29c, 29d sind nach innen gerichtet und erstrecken sich vorzugsweise in gleicher Höhe aufeinander zu. Im verrasteten Zustand umgreifen die beiden Rastnocken 29c und 29d die korrespondierende Klemmrippe 23 des Motorträgers 13.

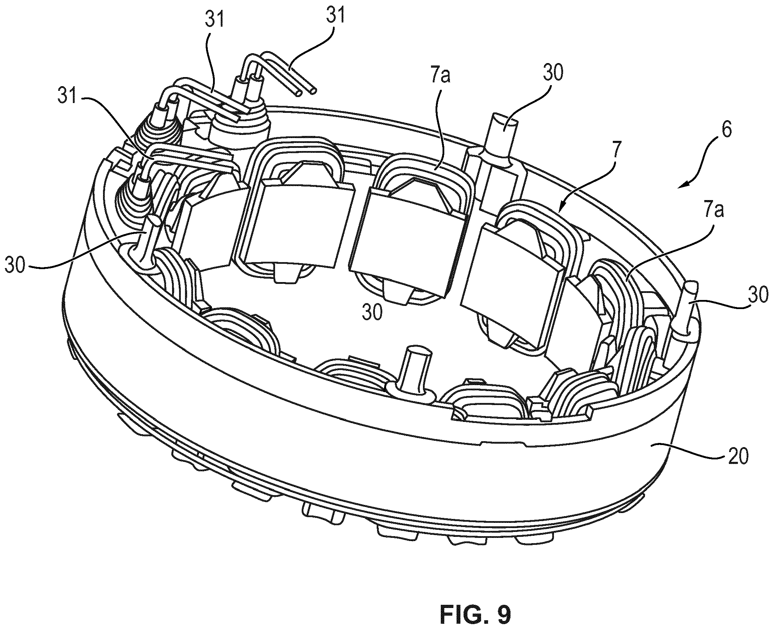

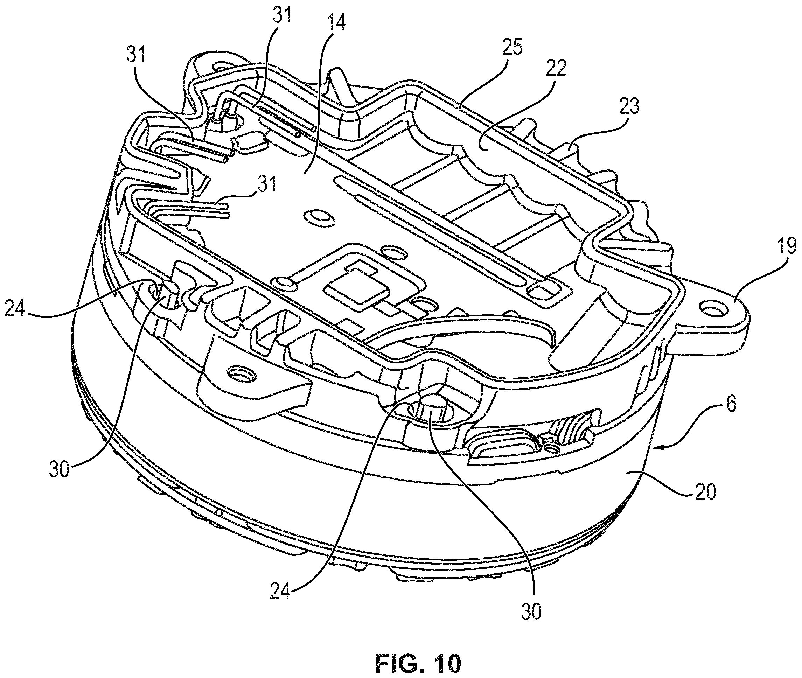

Fig. 9 zeigt den mit der Drehfeldwicklung 7 bewickelten und mit dem Kunststoffmantel 20 umspritzten Stator 6. Zur Verbindung des Stators 6 mit dem Motorträger 13 sind an dem Kunststoffmantel 20 des Stators 6 in Richtung des Motorträgers 13 erhabene Stemmnoppen 30 angeformt, die in der Fügeverbindung die korrespondierenden Stemm- bzw. Fixieröffnungen 24 des Motorträgers 13 durchgreifen. Dieser Fügezustand ist in Fig. 10 dargestellt. Anschließend werden die Stemmnoppen 30 verstemmt, beispielweise heiß verformt.

In diesem Fügezustand ragen die jeweils Paare 31 von Wicklungsenden 31a, 31b der Drehfeldwicklung 7 bevorzugt im selben Quadranten des kreisförmigen Stators 6 in das Elektronikfach 14 hinein und sind dort radial nach innen verlaufend im Wesentlichen rechtwinklig abgebogen. Es sind drei derartige Paare 31 von Wicklungsenden 31a, 31b vorgesehen. In der Verbindung Kontaktierung mit der Umrichterelektronik 15 sind die Wicklungsenden 31a, 31b vorzugsweise in Dreieckschaltung der die Drehfeldwicklung 7 bildenden Spulen 7a verschaltet.

Eine zuverlässig abgedichtete Einbringung der Wicklungsendenpaare 31 der Drehfeldwicklung 7 in das Elektronikfach 14 über Durchtrittsöffnungen 32 des Motorträgers 13 erfolgt mittels Dichtelementen 33. Jedes der Dichtelemente 33 besteht aus einem Zweikomponentenkunststoff mit einer vergleichsweise weichen Dichtkomponente 33a und mit einer hiermit einstückigen, vergleichsweise harten Stützkomponente 33b.

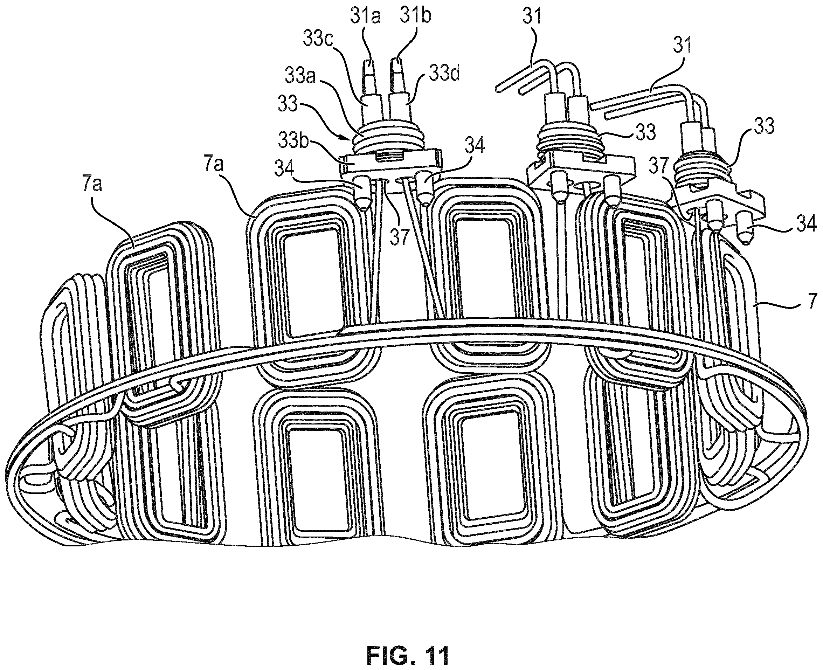

Wie aus Fig. 11 vergleichsweise deutlich ersichtlich ist, ist die vergleichsweise weiche Dichtungskomponente 33a des jeweiligen Dichtelements 33 nach Art einer Labyrinthdichtung mit außenseitigen, axial hintereinander liegenden Wülsten ausgebildet. Die mit der weichen Dichtungskomponente 33a einstückige, vergleichsweise harte Stützkomponente 33b trägt bodenseitig, d.h. auf der der weichen Dichtungskomponente 33a abgewandten Unterseite angeformte Steckzapfen 34. Dabei sind je Dichtungselement 33 zwei derartige Steckzapfen 34 vorgesehen.

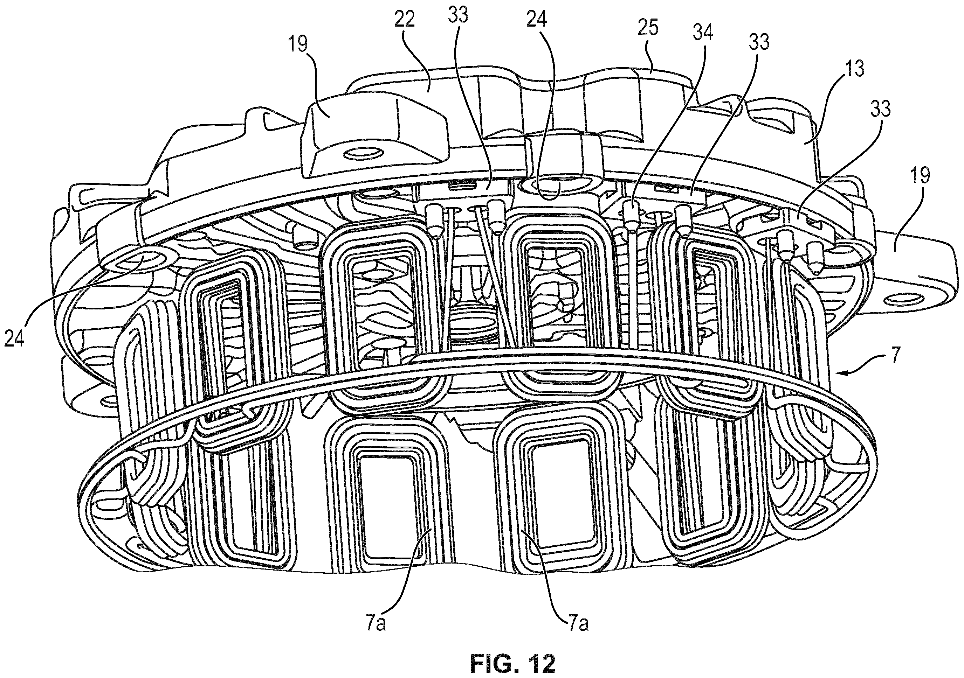

Wie aus Fig. 12 ersichtlich ist, ragt die harte Stützkomponente 33b des jeweiligen Dichtelementes 33 auf der dem Stator 6 bzw. der Drehfeldwicklung 7 zugewandten Trägerseite aus dem Motorträger 13 heraus. Währenddessen sitzt die jeweils weiche Dichtungskomponente 33a des entsprechenden Dichtelementes 33 in der trägerseitigen Durchtrittsöffnung 32 des Motorträgers 13 dichtend ein.

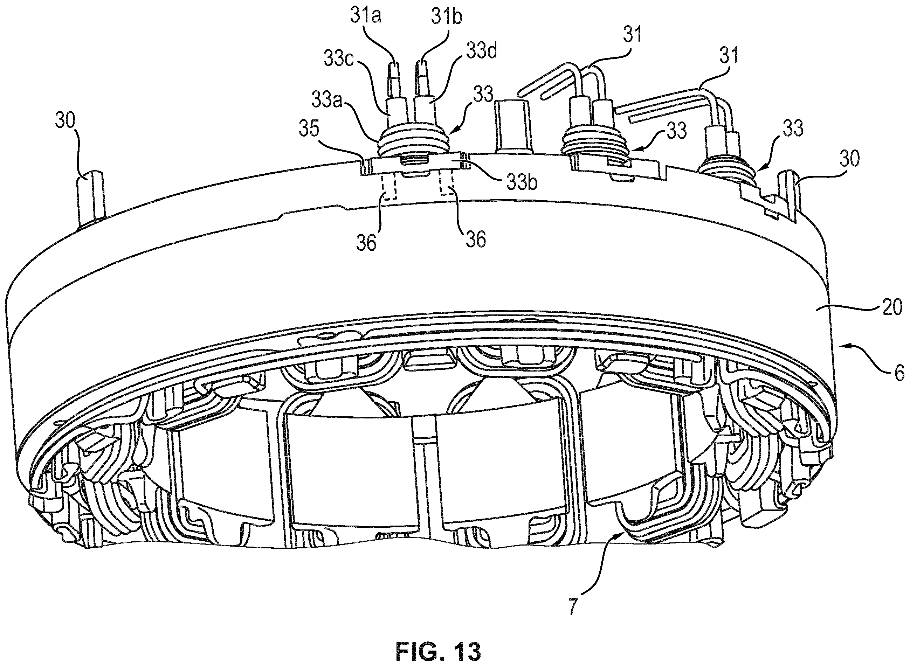

Wie aus Fig. 13 ersichtlich ist, sitzt im Montagezustand die vergleichsweise harte Stützkomponente 33b des jeweiligen Dichtelementes 33 in einer in den Kunststoffmantel 20 des Stators 6 eingeformten Aufnahmetasche 35 ein. In die Aufnahmetaschen 35 sind bodenseitig Stecköffnungen 36 eingebracht, in der die korrespondierenden Steckzapfen 34 der Dichtelemente 33 einstecken.

Wie aus den Fig. 11 und 13 vergleichsweise deutlich ersichtlich ist, sind an die weiche Dichtungskomponente 33a des jeweiligen Dichtelementes 33 für jedes der Wicklungsenden 31a und 31b des Wicklungsendenpaares 31 jeweils eine Dichthülse 33c bzw. 33d angeformt, die das jeweilige Wicklungsende 31a bzw. 31b dichtend umschließen. Zudem sind zum Durchführen der Wicklungsenden 31a, 31b durch das jeweilige Dichtungselement 33 in dessen harte Stützkomponente 33b Durchtrittsöffnungen 37 eingebracht.

**Bezugszeichenliste**

| | | | |
|---|---|---|---|
| 1 | Lüfter | 27 | Füllspalt |
| 2 | Lüfterrad | 27a | Füllspaltbereich |
| 3 | Kappe | 28 | Abstandsnocke |
| 4 | Luftleitschaufel | 29 | Fixierklammer |
| 5 | Lüfter-/Motor | 29a,b | Klemmschenkel |
| 6 | Stator | 29c,d | Rastnocke |
| 7 | Drehfeldwicklung | 30 | Stemmnoppe |
| 7a | Spule | 31 | Wicklungsendenpaar |
| 8 | Rotor | 31a,b | Wicklungsende |
| 9 | Motorachse | 32 | Durchtrittsöffnung |
| 10 | Wälzlager | 33 | Dichtelement |
| 11 | Wälzlager | 33a | weiche Dichtkomponente |
| 12 | Federring | | |
| 13 | Motorträger | 33b | harte Stützkomponente |
| 14 | Elektronikfach | 33c,d | Dichthülse |
| 15 | Umrichterelektronik | 34 | Steckzapfen |
| 16 | Elektronikfachdeckel | 35 | Aufnahmetasche |
| 17 | Achsbolzen | 36 | Stecköffnung |
| 18 | Schraubdom | 37 | Durchtrittsöffnung |
| 19 | Stirnfläche | | |
| 20 | Kunststoffmantel | | |
| 21 | Anschlusskabel | | |
| 21a | Versorgungsleitung | | |
| 21b | Sensor-/Datenleitung | | |
| 22 | Dichtrand | | |
| 23 | Klemmrippe | | |
| 24 | Stemm-/Fixieröffnung | | |
| 25 | Dichtsteg | | |
| 26 | Dichtnut | | |
| 26a | innenseitige Nutwand | | |
| 26b | außenseitige Nutwand | | |

## Patentansprüche

1. Elektromotor (5), insbesondere Kühlerlüftermotor eines Kraftfahrzeugs, mit einem gegenüber einem Stator (6) drehbar gelagerten Rotor (8) und mit einem Elektronikfach (14) zur Aufnahme einer Umrichterelektronik (15) sowie mit einem Elektronikfachdeckel (16), der eine umlaufende Dichtnut (26) aufweist, in die ein umlaufender Rand (22) des Elektronikfaches (14) mit einem korrespondierenden Dichtsteg (25) eingreift
**gekennzeichnet durch**,
- einen das Elektronikfach (14) aufweisenden Motorträger (13), der **durch** ein einstückiges Druckgussteil aus Aluminium gebildet ist und außerhalb des Elektronikfaches (14) auf der dem Elektronikfachdeckel (16) zugewandten Oberseite an gegenüberliegenden Seiten des Elektronikfachs (14) radial verlaufende Klemmrippen (23) aufweist,
- wobei der Elektronikfachdeckel (16) **durch** ein Spritzgussteil aus Kunststoff gebildet ist,
- wobei zwischen der deckelseitig umlaufenden Dichtnut (26) und dem korrespondierenden, in diese formschlüssig eingreifenden Dichtsteg (25) des Elektronikfaches (14) ein Füllspalt (27) gebildet ist, in den eine durch Erwärmung verklebende Dichtmasse als Dichtmaterial eingebracht ist, und
- wobei an den Elektronikfachdeckel (16) Fixierklammern (29) angeformt sind, welche die am Motorträger (23) vorgesehenen, korrespondierenden Klemmrippen (23) zur Grobzentrierung und zumindest zur Grobfixierung des Elektronikfachdeckels (16) am Motorträger (13) übergreifen.

2. Elektromotor (5) nach Anspruch 1,
**gekennzeichnet durch**
zwei an gegenüberliegenden Seiten an den Elektronikfachdeckel (16) angeformte Fixierklammern (29), die jeweils eine der am Motorträger (23) vorgesehenen Klemmrippen (23) übergreifen, um mit diesen zu verrasten.

3. Elektromotor (5) nach Anspruch 1 oder 2,
**dadurch gekennzeichnet,**
**dass** in die deckelseitig umlaufende Dichtnut (26) eine Anzahl von Abstandsnocken (28) zur Anlage am korrespondierenden Dichtsteg (25) des Elektronikfaches (14) eingeformt ist.

4. Elektromotor (5) nach einem der Ansprüche 1 bis 3,
**dadurch gekennzeichnet,**
**dass** die jeweilige Fixierklammer (29) im Wesentlichen U-förmig mit zwei Klemmschenkeln (29a, 29b) gebildet, die jeweils endseitig eine nach innen gerichtete Rastnocke (29c, 29d) tragen, wobei die Rastnocken (29c, 29d) im verrasteten Zustand die korrespondierende Klemmrippe (23) des Motorträgers (13) umgreifen.

## Claims

1. Electric motor (5), in particular radiator cooling fan motor of a motor vehicle, having a rotor (8) that is rotatably mounted with respect to a stator (6) and having an electronics compartment (14) for receiving converter electronics (15) and having an electronics compartment cover (16) that has a peripheral sealing groove (26), into which a peripheral edge (22) of the electronics compartment (14) engages with a corresponding sealing web (25),
**characterised by**
- a motor support (13) having the electronics compartment (14) which is formed by an integral die-cast part made of aluminium and has radially running clamping ribs (23) outside the electronics compartment (14) on the upper side facing towards the electronics compartment cover (16) on opposite sides of the electronics compartment (14),
- wherein the electronics compartment cover (16) is formed by an injection-moulded part made of plastic,
- wherein a filling gap (27) is formed between the cover-side peripheral sealing groove (26) and the corresponding sealing web (25) of the electronics compartment (14), said sealing web (25) engaging positively into said sealing groove (26), into which filling gap (27) a sealant that adheres by warming is introduced as the sealing material, and
- wherein fixing clamps (29) are moulded onto the electronics compartment cover (16), which engage over the corresponding clamping ribs (23) provided on the motor support (13) for roughly centring and at least for roughly fixing the electronics compartment cover (16) on the motor support (13).

2. Electric motor (5) according to claim 1,
**characterised by**
two fixing clamps (29) moulded onto opposite sides on the electronics compartment cover (16) which each engage over one of the clamping ribs (23) provided on the motor support (23) in order to latch with said clamping ribs (23).

3. Electric motor (5) according to claim 1 or 2,
**characterised in that**
a number of spacing projections (28) are moulded into the cover-side peripheral sealing groove (26) for abutting on the corresponding sealing web (25) of the electronics compartment (14).

4. Electric motor (5) according to one of claims 1 to 3,
**characterised in that**
the respective fixing clamps (29) are substantially formed to be U-shaped with two clamping limbs (29a, 29b), which each support a latching projection (29c, 29d) on the end side directed inwards, wherein the latching projections (29c, 29d) engage around the corresponding clamping rib (23) of the motor support (13) in the latched state.

## Revendications

1. Moteur électrique (5), en particulier moteur de ventilateur de radiateur d'un véhicule automobile, comprenant un rotor (8) logé rotatif par rapport à un stator (6) et un compartiment d'électronique (14) pour recevoir une électronique de convertisseur (15), ainsi qu'un couvercle de compartiment d'électronique (16) muni d'une rainure d'étanchéité périphérique (26) dans laquelle un bord périphérique (22) du compartiment d'électronique (14) s'engage avec un rebord d'étanchéité (25) correspondante,
**caractérisé par**
- un support de moteur (13) muni du compartiment d'électronique (14), lequel support de moteur est formé d'une pièce monobloc moulée sous pression en aluminium et présente des nervures de serrage (23) s'étendant radialement sur la face supérieure dirigée vers le couvercle de compartiment d'électronique (16), sur des côtés opposés du compartiment d'électronique (14) et à l'extérieur du compartiment électronique (14),
- le couvercle de compartiment d'électronique (16) étant formé par une pièce en matière plastique moulée par injection,
- une fente de remplissage (27) étant formée entre la rainure d'étanchéité (26) périphérique côté couvercle et le rebord d'étanchéité (25) correspondant du compartiment d'électronique (14) qui s'engage par emboîtement de forme dans la rainure d'étanchéité, fente de remplissage dans laquelle une masse d'étanchéité qui adhère par chauffage est introduite en tant que matériau d'étanchéité, et
- des pinces de fixation (29) étant formées sur le couvercle de compartiment d'électronique (16), lesquelles s'engagent sur les nervures de serrage (23) correspondantes prévues sur le support de moteur (13) pour un centrage approximatif et au moins pour la fixation approximative du couvercle de compartiment d'électronique (16) sur le support de moteur (13).

2. Moteur électrique (5) selon la revendication 1,
**caractérisé par**
deux pinces de fixation (29) formées sur des côtés opposés du couvercle de compartiment d'électronique (16) et qui s'engagent chacune sur l'une des nervures de serrage (23) prévues sur le support de moteur (13) pour s'encliqueter dessus.

3. Moteur électrique (5) selon la revendication 1 ou 2,
**caractérisé**
**en ce qu**'un certain nombre de cames d'écartement (28) sont formées dans la rainure d'étanchéité (26) périphérique côté couvercle, lesquelles sont destinées à venir en butée contre le rebord d'étanchéité (25) correspondante du compartiment d'électronique (14).

4. Moteur électrique (5) selon l'une des revendications 1 à 3,
**caractérisé**
**en ce que** chaque pince de fixation (29) a sensiblement une forme de U avec deux branches de serrage (29a, 29b) qui portent chacune à leur extrémité une came d'encliquetage (29c, 29d) dirigée vers l'intérieur, les cames d'encliquetage (29c, 29d) entourant, à l'état encliqueté, la nervure de serrage (23) correspondante du support de moteur (13).
